# EUROPEAN PATENT SPECIFICATION

(11) **EP 4 235 397 B1**
(45) Date of publication and mention of the grant of the patent: **19.06.2024**
(21) Application number: 22305212.7
(22) Date of filing: 25.02.2022
(51) Int. Cl.: G06F 7/499

(54) **METHOD AND SYSTEM FOR CONVERTING AN INPUT COMPUTER PROGRAM INTO AN OUTPUT COMPUTER PROGRAM ACHIEVING A TARGET GLOBAL ACCURACY**
VERFAHREN UND SYSTEM ZUM UMWANDELN EINES EINGABECOMPUTERPROGRAMMS IN EIN AUSGABECOMPUTERPROGRAMM, DAS EINE GLOBALE ZIELGENAUIGKEIT ERREICHT
PROCÉDÉ ET SYSTÈME POUR CONVERTIR UN PROGRAMME INFORMATIQUE D'ENTRÉE EN PROGRAMME INFORMATIQUE DE SORTIE PERMETTANT D'ATTEINDRE UNE PRÉCISION DE CIBLE GLOBALE

(43) Date of publication of application: 30.08.2023
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: BOYER, Benoit, 35708 RENNES CEDEX 7 (FR); FAISSOLE, Florian, 35708 RENNES CEDEX 7 (FR); MELQUIOND, Guillaume, 91405 ORSAY CEDEX (FR)
(74) Representative: Plasseraud IP

(56) References cited:
- EVA DARULOVA ET AL: "Sound Approximation of Programs with Elementary Functions", ARXIV.ORG, CORNELL UNIVERSITY LIBRARY, 201 OLIN LIBRARY CORNELL UNIVERSITY ITHACA, NY 14853, 26 November 2018 (2018-11-26), XP081041218,
- MAXIME JACQUEMIN ET AL: "Abstract Compilation for Verification of Numerical Accuracy Properties", ARXIV.ORG, CORNELL UNIVERSITY LIBRARY, 201 OLIN LIBRARY CORNELL UNIVERSITY ITHACA, NY 14853, 25 November 2019 (2019-11-25), XP081539053,
- KIRCHNER FLORENT ET AL: "Frama-C: A software analysis perspective", FORMAL ASPECTS OF COMPUTING, SPRINGER INTERNATIONAL, LONDON, GB, vol. 27, no. 3, 9 January 2015 (2015-01-09), pages 573-609, XP035492464, ISSN: 0934-5043, DOI: 10.1007/S00165-014-0326-7 [retrieved on 2015-01-09]
- BRUNIE NICOLAS ET AL: "Code Generators for Mathematical Functions", 2016 IEEE 23ND SYMPOSIUM ON COMPUTER ARITHMETIC (ARITH), IEEE, 22 June 2015 (2015-06-22), pages 66-73, XP033195960, ISSN: 1063-6889, DOI: 10.1109/ARITH.2015.22 [retrieved on 2015-08-14]

## Description

### TECHNICAL FIELD

The present disclosure relates to computer program development and relates more specifically to a method and system for converting an input computer program, which includes mathematical functions applied to floating-point variables, into an output computer program achieving a target global accuracy. The target global accuracy corresponds to an upper bound on a global error allowed for the output computer program, wherein the errors relate to mathematical functions approximations and/or to floating-point rounding errors.

### BACKGROUND ART

Numerical computations are ubiquitous in various industrial domains which require them e.g. signal or image processing, automatic control, etc. For instance, such numerical computations are extensively used in computer programs of embedded systems for a variety of applications such as automotive or nuclear plants control, etc.

Such numerical computations are however subject to inherent computation errors which relate to the fact that approximations are made.

For instance, computer programs running on e.g. embedded systems are subject to rounding errors, due to the finite precision of computer arithmetic, especially floating-point arithmetic. Indeed, such computer programs do not use actual real numbers but corresponding floating-point approximations which introduce an error. This error may be negligible in some cases, but it can also cumulate during the execution of the computer program, especially in the presence of imbricated loops, and become non negligible.

Another source of computation errors corresponds to approximations made in mathematical functions implementations. For instance, mathematical functions implementations of physical systems rely on approximations which are due to the floating-point arithmetic but also to the fact that the mathematical model of the physical system is itself approximated. For instance, trigonometric functions such as cosine and sine functions are approximated by e.g. polynomial functions which introduce an error in the numerical computation. Also, when a physical system is modeled by e.g. a differential equation, such a differential equation can be solved by a mathematical function (e.g. by a Runge-Kutta method), but the solution provided is only an approximation of the actual solution of the differential equation modeling the physical system.

These two sources of errors (i.e. floating-point rounding errors and mathematical functions approximations) are particularly hard to predict and to debug. This is especially true when mathematical functions libraries such as libm are used in computer programs because the actual implementations of the mathematical functions are generally black-box and architecture-dependent.

However, it is important to be able to determine the global error (i.e. floating-point rounding errors and/or mathematical functions approximations) inherent to a computer program, to be able to ensure that the global error of a computer program remains below a desired target upper bound.

Current solutions target the verification of the numerical accuracy of computer programs. These techniques are either empirical/stochastic or based on formal verification methods. While tools of the former category give results for arbitrary computer programs with mathematical function calls, tools of the latter category cannot be used with black-box implementations of mathematical functions, whose accuracy cannot be statically verified.

Hence, current solutions make it possible to determine in some cases the global error (but not to formally prove it when black-box implementations of mathematical functions are used), but do not enable ensuring that the global error due to floating-point rounding errors and/or mathematical functions approximations remains below a target upper bound.

### SUMMARY

The present disclosure aims at improving the situation. In particular, the present disclosure aims at overcoming at least some of the limitations of the prior art discussed above, by proposing a solution enabling obtaining a computer program having a predetermined target global accuracy (i.e. a global error below a predetermined upper bound) even when black-box implementations of mathematical functions are used.

Also, in some embodiments at least, the present disclosure aims at proposing a solution enabling to formally prove that the obtained computer program achieves the target global accuracy.

For this purpose, and according to a first aspect, the present disclosure relates to a computer implemented method for converting an input computer program into an output computer program having a target global accuracy, said input computer program including mathematical functions applied to floating-point variables and the target global accuracy corresponding to a bound on a global error due to mathematical functions approximations and/or to floating-point rounding errors, said method comprising:
- receiving a target internal accuracy for each mathematical function included in the input computer program, wherein the target internal accuracies correspond to respective bounds on internal errors of the mathematical functions, required to achieve the target global accuracy,
- analyzing the input computer program to determine a dependency graph describing dependencies between mathematical functions calls,
wherein the method further comprises processing the mathematical functions according to the dependency graph, wherein said processing comprises, for each processed mathematical function:
- using a value range determination tool to produce a value range for each variable of the processed mathematical function, based on any synthesized mathematical function obtained for a mathematical function on which the processed mathematical function depends according to the dependency graph,
- using a synthesis tool to produce a synthesized mathematical function having the target internal accuracy for the processed mathematical function, based on the value range of each variable of the processed mathematical function,
wherein the method further comprises generating the output computer program by replacing, in the input computer program, each mathematical function call by a call to its corresponding synthesized mathematical function.

Hence, the proposed solution relies on mathematical function synthesis to replace the implementations of the mathematical functions (which may be black-box, or which may have an insufficient target internal accuracy, or which may be too sophisticated and hard to formally verify) by synthesized implementations which achieve the target internal accuracies (target accuracies local to the corresponding mathematical functions) which collectively enable achieving the target global accuracy set for the computer program.

Synthesis tools usually require a prior knowledge of the value ranges of the variables used by the mathematical function to be synthesized. Such value ranges can be determined by using value range determination tools such as abstract interpretation tools or statistical tools, etc. However, in case of imbricated mathematical functions, i.e. a mathematical function that is called in another mathematical function, the value ranges of the calling mathematical function depend on the called mathematical function and may vary when a synthesized version is used instead. Hence, when determining the value ranges of a calling mathematical function, this should be done by replacing the called mathematical function by a call to the corresponding synthesized implementation. Accordingly, the proposed solution determines a dependency graph between mathematical functions calls, and the mathematical functions are processed (synthesized) according to the order provided by the dependency graph. A called mathematical function is processed first in order to obtain its synthesized version achieving the target internal accuracy for this mathematical function. The synthesized version of the called mathematical function is then used during the processing of the calling mathematical function, in particular during the determination of the value ranges of the variables of the calling mathematical function which are subsequently used by the synthesis tool.

Hence, by combining value range determination tools (e.g. abstract interpretation tools) with synthesis tools according to the dependency graph which describes the dependencies between the mathematical functions' calls, the present disclosure enables converting the input computer program into an output computer program which achieves the target global accuracy, provided that achieving the target internal accuracies of the mathematical functions enables achieving the target global accuracy for the whole output computer program.

In specific embodiments, the converting method can further comprise one or more of the following optional features, considered either alone or in any technically possible combination.

In specific embodiments, the converting method further comprises annotating the output computer program based on the target global accuracy and verifying the annotations of the output computer program by using a formal verification tool.

Hence, by annotating the output computer program with the target global accuracy, it is possible to formally verify that the target global accuracy is indeed achieved by said output computer program.

In specific embodiments, the output computer program is further annotated based on the value ranges of the mathematical functions and based on the target internal accuracies of the synthesized mathematical functions.

In specific embodiments, the formal verification tool is a deductive verification tool.

In specific embodiments, the deductive verification tool uses automatic theorem provers.

In specific embodiments, the deductive verification tool uses different automatic theorem provers for proof obligations related to mathematical functions approximations and for proof obligations related to floating-point rounding errors.

In specific embodiments, when the output computer program generated does not achieve the target global accuracy, the method further comprises iterating the following steps until an output computer program is generated which achieves the target global accuracy:
- updating the target internal accuracies, by further constraining all or part of said target internal accuracies,
- repeating the processing of the mathematical functions of the input computer program to produce updated synthesized mathematical functions based on the updated target internal accuracies,
- generating the output computer program based on the updated synthesized mathematical functions.

Hence, if the target internal accuracies are not sufficient to achieve the target global accuracy for the output computer program, it is possible to iteratively increase the constraints on all or part of the target internal accuracies (i.e. iteratively decrease the target upper bound on the internal error of all or part of the mathematical functions) until the generated synthesized mathematical functions yield an output computer program which actually achieves the target global accuracy set for it.

In specific embodiments, different synthesized mathematical functions are synthesized for a same mathematical function having different call locations in the input computer program.

Indeed, a same mathematical function may be called at different locations in the input computer program without requiring having the same target internal accuracy for all call locations. In such a case, it is possible to generate different synthesized mathematical functions for a same mathematical function, with different respective target internal accuracies, in order to e.g. reduce the computational complexity at call locations tolerating higher internal errors.

In specific embodiments, the value range determination tool is an abstract interpretation tool.

According to a second aspect, the present disclosure relates to a computer program product comprising instructions which, when executed by at least one processor, configure said at least one processor to carry out a converting method according to any one of the embodiments of the present disclosure.

According to a third aspect, the present disclosure relates to a computer-readable storage medium comprising instructions which, when executed by at least one processor, configure said at least one processor to carry out a converting method according to any one of the embodiments of the present disclosure.

According to a fourth aspect, the present disclosure relates to a system for converting an input computer program into an output computer program having a target global accuracy, said input computer program including mathematical functions applied to floating-point variables and the target global accuracy corresponds to a bound on a global error due to mathematical functions approximations and/or to floating-point rounding errors, said system comprising at least one processor and at least one memory, wherein the at least one processor is configured to carry out a converting method according to any one of the embodiments of the present disclosure.

### BRIEF DESCRIPTION OF DRAWINGS

The invention will be better understood upon reading the following description, given as an example that is in no way limiting, and made in reference to the figures which show:
- Figure 1: a diagram representing the main steps of an exemplary embodiment of a method for converting an input computer program into an output computer program,
- Figure 2: an example of input computer program,
- Figure 3: examples of possible dependency graphs for the input computer program of figure 2,
- Figure 4: a schematic representation of the execution of the successive steps of the converting method for an input computer program,
- Figure 5: a schematic representation of the dependency graph of the input computer program considered in figure 4,
- Figure 6: a schematic representation of the execution of the successive steps of the converting method for another input computer program,
- Figure 7: a schematic representation of the dependency graph of the input computer program considered in figure 6.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

### DESCRIPTION OF EMBODIMENTS

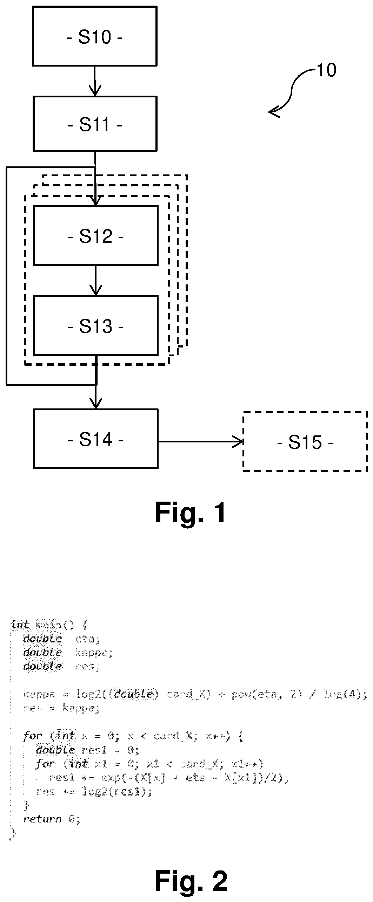

Figure 1 represents schematically the main steps of a method 10 for converting an input computer program into an output computer program.

The converting method 10 is carried out by a computer system (not represented in the figures). In preferred embodiments, the computer system comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the converting method 10. Alternatively, or in combination thereof, the computer system can comprise one or more programmable logic circuits (FPGA, PLD, etc.), and/or one or more specialized integrated circuits (ASIC), etc., adapted for implementing all or part of said steps of the converting method 10. In other words, the computer system comprises a set of means configured by software (specific computer program product) and/or by hardware (processor, FPGA, PLD, ASIC, etc.) to implement the steps of the converting method 10.

In the present disclosure, the goal of the conversion is to achieve a target global accuracy. The target global accuracy corresponds to an upper bound on an allowable global error. The global error corresponds to the combination of the errors due to all mathematical functions' approximations and all floating-point rounding errors performed by the output computer program.

The input computer program corresponds to a computer program in source code, which may be written in any computer language, for instance in C or C++ or Fortran computer language. For instance, the input computer program is meant to run on an embedded system, in order to execute tasks in relation with e.g. signal or image processing, automatic control, etc. The input computer program includes assignments, control structures (conditional branches, switches, loops, etc.), mathematical operations (addition, multiplication, etc.) and mathematical functions (exp, log, sin, cos, etc.) calls, applied to floating-point variables. According to a non-limitative example, the mathematical functions are the functions included in the library libm.

As discussed above, the implementations of the mathematical functions included in the input computer program are typically black-box in the sense that their source code is not available. Typically, they are included as calls to mathematical functions in external libraries such as the libm library.

As illustrated by figure 1, the converting method 10 comprises a step S10 of receiving a target internal accuracy for each mathematical function used in the input computer program. The target internal accuracy of a mathematical function corresponds to an upper bound on an internal error which corresponds to the error due to all the (mathematical model) approximations and all floating-point rounding errors made in the considered mathematical function. Hence, the target internal accuracy considers the errors local to the associated mathematical function, while the target global accuracy considers the global error at the computer program level, which depends *inter alia* on the local errors of all the mathematical functions called. In the present disclosure, the obtained target internal accuracies are such that (or at least deemed to be such that), if the mathematical functions' implementations enable achieving their respective target internal accuracies, then the target global accuracy is also achieved by the computer program.

How the target internal accuracies are actually determined is out of scope of the present disclosure and the target internal accuracies are assumed to be provided as an input of the converting method 10. However, it should be noted that such target internal accuracies can be obtained by using e.g. statistical tools such as Monte Carlo arithmetic. Indeed, such techniques can be used to determine the impact of accuracy lowering for a given mathematical function of a computer program, therefore, to evaluate the impact of said given mathematical function internal accuracy on the global accuracy of the computer program (see e.g. [Defour2020]).

It should be noted that, in the present disclosure, it is possible to obtain a single target internal accuracy per mathematical function regardless the number of different call locations to the same mathematical function, or to obtain a plurality of different target internal accuracies for the same mathematical function, for instance one for each call location of this mathematical function or one for each different target internal accuracy obtained for the same mathematical function. Indeed, when a given mathematical function (e.g. sin) has several call locations within the computer program, the contribution of the mathematical function to the global error may vary from one call location to another. As will be discussed below, the call to the mathematical function will be replaced by a call to a synthesized mathematical function having the desired target internal accuracy, such that it is possible to generate different synthesized mathematical functions for different call locations of the same mathematical function. Of course, it is also possible to generate a single synthesized mathematical function for a given mathematical function, achieving a target internal accuracy which corresponds to the lowest upper bound on the internal error which enables achieving the target global accuracy.

As illustrated by figure 1, the converting method 10 comprises also a step S11 of analyzing the input computer program to determine a dependency graph describing dependencies between mathematical functions calls. Basically, during the step S11 of analyzing, the computer system implementing the converting method 10 parses the input computer program to identify the mathematical functions called by the input computer program and their call locations, and also to identify mathematical functions which are called to process the results of previous mathematical functions' calls (i.e. identify dependencies between mathematical functions' calls).

Figure 2 represents schematically the source code of a simple exemplary input computer program. In this example, the input computer program calls four different mathematical functions, namely log2 (binary logarithm), pow (power), exp (exponential) and log (logarithm). As can be seen in figure 2, the variable received as input by the mathematical function pow does not depend on the result of any other mathematical function, and the result of the mathematical function pow is not used by another mathematical function. The variable received as input by the mathematical function log does not depend on the result of any other mathematical function, and the result of the mathematical function log is not used by another mathematical function. The variable received as input by the mathematical function exp does not depend on the result of any other mathematical function, however the result of the mathematical function exp is used by the mathematical function log2 called inside the loop. The result of the mathematical function log2 called inside the loop is not used by another mathematical function. However, the mathematical function log2 is also called outside the loop, where the variable it receives as input does not depend on the result of another mathematical function and its result is not used by another mathematical function.

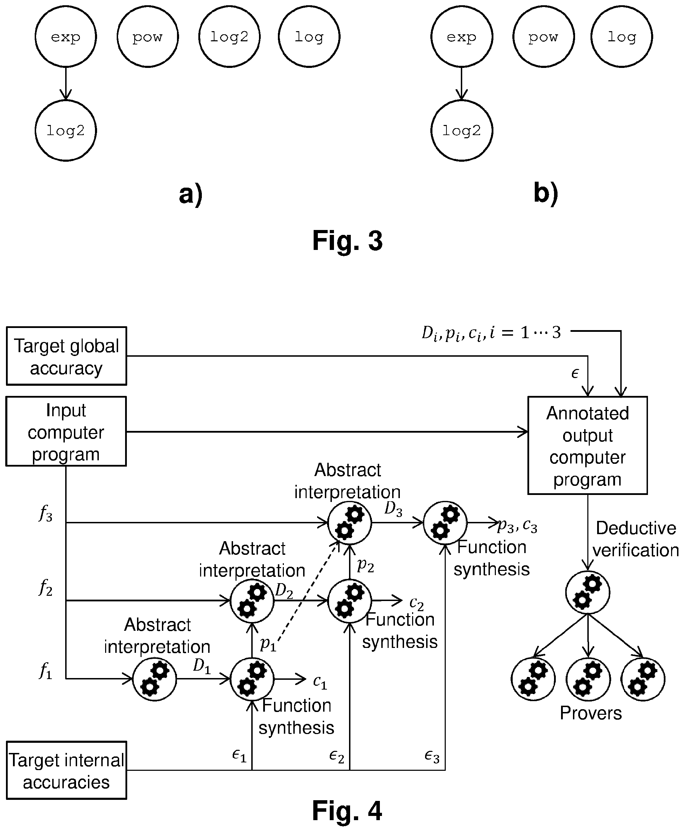

Part a) of figure 3 represents schematically a dependency graph in the case where each call of a same mathematical function is associated to a respective target internal accuracy. Hence, the mathematical function log2, which is called twice in the input computer program of figure 2, appears twice in the dependency graph. Each mathematical function which does not use the result of another mathematical function is the origin of a dependency path. In the example of part a) of figure 3, there are four such paths, starting from the mathematical functions log2, pow, exp and log.

Part b) of figure 3 represents schematically a dependency graph in the case where a same mathematical function is associated to a single target internal accuracy regardless its number of call locations in the input computer program. Hence, the mathematical function log2, which is called twice in the input computer program of figure 2, appears only once in the dependency graph. Since the mathematical function log2 called inside the loop processes the result of the mathematical function exp, it is considered to be the call location that will require the lowest upper bound on its internal error, such that only this call location is considered in the dependency graph. In the example of part b) of figure 3, there are three paths, starting from the mathematical functions pow, exp and log.

It should be noted that the step S10 may also be executed after the execution of the step S11, in order to first list the mathematical functions called and then obtain their respective target internal accuracies based on the list. For instance, it is possible to obtain target internal accuracies for each occurrence of each mathematical function in the dependency graph.

Once the computer system has obtained the target internal accuracies for mathematical functions of the input computer program, and the dependency graph, the computer system processes the mathematical functions according to the dependency graph. In particular, mathematical functions on a same path are processed successively, from the origin of the path, to produce synthesized mathematical functions for each mathematical function in the dependency graph.

More specifically, for each processed mathematical function, the converting method 10 comprises steps of:
- S12 using a value range determination tool to produce a value range for each variable of the processed mathematical function, based on each synthesized mathematical function obtained for a mathematical function on which the processed mathematical function depends according to the dependency graph,
- S13 using a synthesis tool to produce a synthesized mathematical function having the target internal accuracy for the processed mathematical function, based on the value range of each variable of the processed mathematical function.

For instance, if we consider the dependency graph in part b) of figure 3, then three paths are to be processed.

The path having the mathematical function pow as origin comprises only the mathematical function pow. Hence, the mathematical function pow is processed first and a value range determination tool is used to produce values ranges for its input and output variables. Since the mathematical function pow does not depend on another mathematical function, no other synthesized mathematical function is used to produce the value ranges of the mathematical function pow. Then a synthesis tool is used to produce a synthesized mathematical function pow having the target internal accuracy required. The same applies also for the path having the mathematical function log as origin.

The path having the mathematical function exp as origin comprises also the mathematical function log2. Hence, the mathematical function exp is processed first and the value range determination tool is used to produce values ranges for its input and output variables. Since the mathematical function exp does not depend on another mathematical function, no other synthesized mathematical function is used to produce the value ranges of the mathematical function exp. Then the synthesis tool is used to produce a synthesized mathematical function exp having the target internal accuracy required. Then the mathematical function log2 is processed and the value range determination tool is used to produce values ranges for its input and output variables. Since the mathematical function log2 depends on the mathematical function exp, the synthesized implementation of the mathematical function exp is used by the value range determination tool to produce the values ranges for the mathematical function log2. Then the synthesis tool is used to produce a synthesized mathematical function log2 having the target internal accuracy required.

The determination of the value ranges may use any value range determination tool known to the skilled person. For instance the determination of the value ranges of a mathematical function may use a statistical tool, such as Monte Carlo arithmetic.

In preferred embodiments, the determination of the value ranges uses an abstract interpretation tool. Any abstract interpretation tool known to the skilled person may be used. For instance, Fluctuat is an abstract interpretation tool developed at CEA (French Alternative Energies and Atomic Energy Commission) designed to analyze floating-point rounding errors of large C/C++ computer programs in a fully automated way (see [Goubault2013]). Fldlib is another example of abstraction interpretation tool that can be used, developed by Védrine et al. RAI (Run-time abstract interpretation, see [Védrine2021]) is another exemplary tool combining abstract interpretation and runtime verification, which can be used to determine value ranges for the variables of the mathematical functions in the dependency graph.

The generation of the synthesized mathematical functions may use any synthesis tool known to the skilled person. For instance, Sollya [Chevillard2010] is a synthesis tool that can be used to develop safe floating-point computer programs. Given a mathematical expression, Sollya tries to provide both a polynomial approximation of this expression and an upper bound on the error committed when approximating it. Then, Sollya proposes a floating-point implementation of the polynomial approximation that keeps the error in a reasonable interval. In other terms, it provides an implementation of the mathematical function for which the contribution of rounding errors does not break the quality of the polynomial approximation. Also, the Metalibm ANR project addresses the development of tools to automate the generation of mathematical functions and digital filters meeting some criteria such as target accuracy, memory, speed, architecture, etc. All Metalibm tools can generate C functions meeting the user criteria, the target accuracy criterion being achieved through the use of the Sollya theory.

Once all the paths of the dependency graph have been processed, there exists a synthesized mathematical function for each mathematical function called in the input computer program (and possibly for each call location of a same mathematical function) which achieves the target internal accuracy set for it. The converting method 10 comprises a step S14 of generating the output computer program by replacing, in the input computer program, each mathematical function call by a call to its corresponding synthesized mathematical function. Hence, in the output computer program, each mathematical function call has been replaced by a call to a synthesized mathematical function having a known (white-box) implementation and achieving a target internal accuracy. If the target internal accuracies collectively enable achieving the target global accuracy, then the output computer program should in principle achieve the target global accuracy set for it.

At this stage, the target global accuracy of the output computer program is not formally proved. However, if necessary, the converting method 10 may further comprise automatically annotating the output computer program based on the target global accuracy and preferably based on predetermined value ranges for the input variables of the input computer program (for instance received with the target global accuracy). Based on such annotations, and thanks to the fact that the implementations of the synthesized mathematical functions are now known, it is possible to use a formal verification tool to formally prove the target global accuracy set for the output computer program, during an optional formal verification step S15 of the converting method 10.

In preferred embodiments, the output computer program may be further annotated based on the value ranges of the mathematical functions and based on the target internal accuracies of the synthesized mathematical functions, in order to formally prove the target internal accuracies of the synthesized mathematical functions of the output computer program.

The formal verification of the output computer program may use any formal verification tool known to the skilled person. For instance, the formal verification of a computer program enriched with annotations (assertions) of numerical accuracy can be carried out using a deductive verification tool, which automatically discharges proof obligations to dedicated provers. For instance, several Frama-C [Kirchner2015] plug-ins have included method and rounding error analysis features in their specification language. It was first used in the Caduceus plug-in [Boldo2007] which is based on the Why platform, responsible for the communication with dedicated provers like Gappa or the Coq proof assistant. Another non-limitative example of deductive verification tool that can be used is the Jessie plug-in [Ayad2010], based on a Why3 theory of floating-point numbers.

Examples of provers that can be used by the deductive verification tool include automatic theorem provers such as Coqlnterval [Daumas2005] and Gappa [Daumas201 0]. Coqlnterval is a tool for the Coq proof assistant, based on the Flocq Coq formalization of floating-point arithmetic and on interval arithmetic computations (intervals having floating-point lower and upper bounds). Using interval computations, the tool is able to automatically prove inequalities on real-valued expressions. Therefore, it can be used to bound the approximation error of an algebraic expression approaching a mathematical function or model. Gappa is a tool designed to verify arithmetic properties of simple numerical programs. It is particularly adequate to automatically prove, under certain hypotheses, rounding error bounds of algorithms. Also, from a Gappa script, we obtain a certificate that can be automatically checked by the Coq proof assistant such that the bounds are formally-verified. Also, synthesis tools such as Sollya and the Metalibm tools sometimes generate Gappa scripts that can be used by the Gappa tool to formally prove the target internal accuracies of the synthesized mathematical functions generated by such synthesis tools.

Hence, the converting method 10 may, if required, formally prove the target global accuracy of the output computer program and the target internal accuracies of the synthesized implementations of the mathematical functions. If the target internal accuracies of all synthesized mathematical functions are proved, but not the target global accuracy of the output computer program, then this might imply that the target internal accuracies obtained during step S10 are not sufficient to achieve the target global accuracy. If mandatory to achieve the target global accuracy set for the output computer program, then it is possible to repeat the steps of the converting method 10 by further constraining progressively all or part of the target internal accuracies set for the mathematical functions, until an output computer program is generated which achieves the target global accuracy. In the present disclosure, "further constraining" a target internal accuracy means decreasing the target upper bound on the internal error of the corresponding mathematical function.

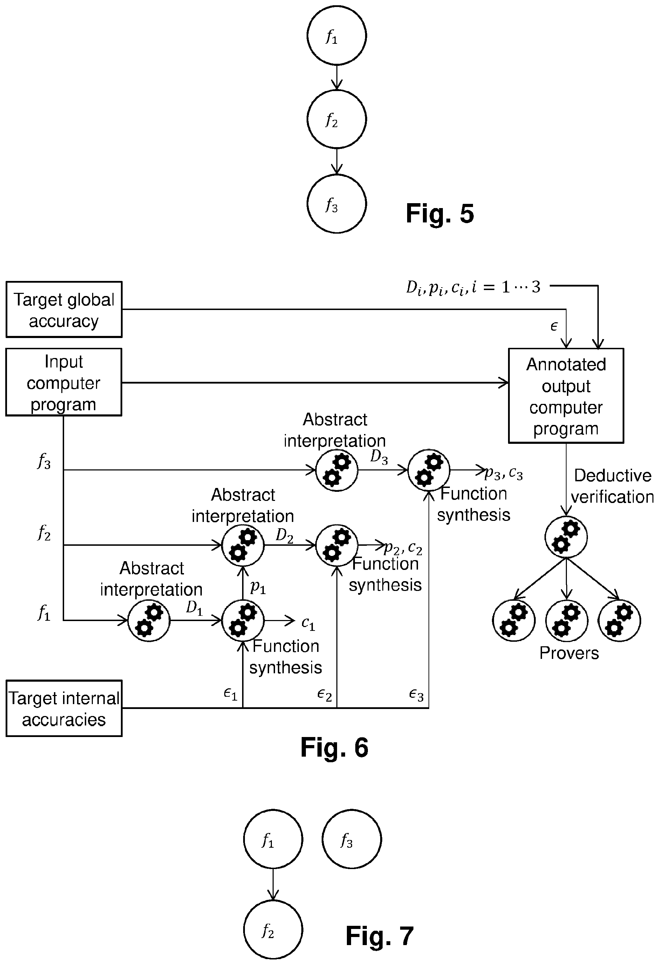

Figure 4 represents schematically the execution of the successive steps of the converting method 10 when considering an exemplary input computer program which includes three mathematical functions *f*₁, *f*₂ and *f*₃, and when considering that the determination of the value ranges of the mathematical functions uses abstract interpretation tools. The dependency graph of these mathematical functions *f*₁, *f*₂ and *f*₃, obtained during step S11, is depicted on figure 5 and includes a single path having as origin the mathematical function *f*₁, followed by the mathematical functions *f*₂ then *f*₃.

The converting method receives as input:
- the input computer program (source code),
- the target global accuracy *ε* set for the output computer program,
- the target internal accuracies *ε*₁, *ε*₂ and *ε*₃ set for the mathematical functions *f*₁, *f*₂ and *f*₃, respectively.

As illustrated by figure 4, the converting method 10 processes the mathematical functions according to the dependency graph in figure 5, and processes first the mathematical function *f*₁. An abstract interpretation tool (e.g. Fluctuat) is used to produce a value range *D*₁ for the mathematical function *f*₁. A synthesis tool uses the mathematical function *f*₁, the value range *D*₁ and the target internal accuracy *ε*₁ to generate a synthesized mathematical function *p*₁. In this example, the synthesis tool also synthesizes a certificate *c*₁ as a predicate ensuring that the target internal accuracy *ε*₁ is guaranteed by *p*₁ on *D*₁.

The mathematical function *f*₂ is processed next. An abstract interpretation tool is used to produce a value range *D*₂, by using also the synthesized mathematical function *p*₁. A synthesis tool uses the mathematical function *f*₂, the value range *D*₂ and the target internal accuracy *ε*₂ to generate a synthesized mathematical function *p*₂ and a certificate *c*₂.

The mathematical function *f*₃ is processed next. An abstract interpretation tool is used to produce a value range *D*₃, by using also the synthesized mathematical function *p*₂ and the synthesized mathematical function *p*₁. A synthesis tool uses the mathematical function *f*₃, the value range *D*₃ and the target internal accuracy *ε*₃ to generate a synthesized mathematical function *p*₃ and a certificate *c*₃.

As illustrated by figure 4, the converting method 10 then generates the output computer program by replacing the calls to the mathematical functions *f*₁, *f*₂ and *f*₃ by calls to the synthesized implementations *p*₁, *p*₂ and *p*₃ (synthesized mathematical functions), respectively.

As discussed above, in some cases, the output computer program can also be enriched with several annotations corresponding to hypotheses, proof obligations or local assertions, for instance:
- a global precondition on the output computer program which includes value ranges for the inputs of the output computer program, which may be user-provided,
- a global postcondition on the output computer program, corresponding to the satisfaction of the target global accuracy *ε* that must be satisfied by the whole output computer program,
- assertions (resp. loop invariants) corresponding to the value ranges *D*₁, *D*₂ and *D*₃ at the call locations of the synthesized mathematical functions (resp. locations of loop entries),
- postconditions of synthesized mathematical functions *p*₁, *p*₂ and *p*₃ corresponding to the target internal accuracies *ε*₁, *ε*₂ and *ε*₃, respectively, guaranteed by synthesis on the value ranges *D*₁, *D*₂ and *D*₃, respectively.

All these annotations are to be used by e.g. a deductive verification tool, for instance based on Why3 or Frama-C.

Then, if required, the converting method 10 performs the formal verification of the automatically generated annotations, with the formal proof of the target global accuracy as final goal in mind. In the example illustrated by figure 4, the converting method 10 uses a deductive verification tool to discharge proof obligations (annotations) to dedicated automatic theorem provers. For instance:
- proof obligations related to method (mathematical) errors could be discharged to tools like Interval, a tool based on interval arithmetic to automatically check inequalities on real arithmetic expressions, or Sollya, on which is based the Metalibm technology,
- proof obligations related to rounding errors could be discharged to dedicated theorem provers like Gappa, e.g. to prove target internal accuracies,
- proof obligations related to abstract interpretation tools like Fluctuat are already guaranteed as abstract interpretation is a formal method, therefore, it should be reused as backend prover,
- proof obligations related to statistical tools used to determine the value ranges of mathematical functions could be discharged to abstract interpretation tools or interactive theorem provers.

Figure 6 represents schematically the execution of the successive steps of the converting method 10 when considering another exemplary input computer program which includes three mathematical functions *f*₁, *f*₂ and *f*₃. The dependency graph of these mathematical functions *f*₁, *f*₂ and *f*₃, obtained during step S11, is depicted on figure 7 and includes two paths:
- a first having as origin the mathematical function *f*₁, followed by the mathematical function *f*₂,
- a second path having as origin (and as single mathematical function) the mathematical function *f*₃.

As illustrated by figure 6, the two paths are processed in parallel. Otherwise the converting method 10 steps are unchanged.

Hence, the present disclosure proposes a methodology for automatically generating, from an input computer program, an output computer program achieving a target global accuracy with respect to mathematical functions' approximations and floating-point rounding errors. This is achieved by combining value range determination tools (such as abstract interpretation tools or statistical tools) and synthesis tools based on a dependency graph describing the dependencies between the calls of the mathematical functions. The target global accuracy of the output computer program can also be formally verified if required, by annotating the output computer program and using e.g. deductive (formal) verification tools.

The proposed converting method 10 is fully automatic, provides an exhaustiveness guarantee of numerical accuracy, and optimizes mathematical function implementations. It reduces both the development and verification time of software relying on intensive use of floating-point numerical computations.

It is emphasized that the present disclosure is not limited to the above exemplary embodiments. Variants of the above exemplary embodiments are also within the scope of the present disclosure.

### REFERENCES

[Defour2020] Defour, D., de Oliveira Castro, P., I 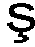 toan, M., & Petit, E. (2020, June), "Custom-precision mathematical library explorations for code profiling and optimization", In 2020 IEEE 27th Symposium on Computer Arithmetic (ARITH) (pp. 121-124), IEEE
[Goubault2013] Goubault, E., Putot, S. (2013, June), "Static analysis by abstract interpretation of numerical programs and systems, and FLUCTUAT", In International Static Analysis Symposium (pp. 1-3), Springer, Berlin, Heidelberg
[Védrine2021] Védrine, F., Jacquemin, M., Kosmatov, N., & Signoles, J. (2021), "Runtime Abstract Interpretation for Numerical Accuracy and Robustness", In International Conference on Verification, Model Checking, and Abstract Interpretation (pp. 243-266), Springer, Cham
[Chevillard2010] Chevillard S., Jolde 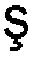 M., & Lauter C. (2010, September), "Sollya: An environment for the development of numerical codes", In International Congress on Mathematical Software (pp. 28-31), Springer, Berlin, Heidelberg
[Kirchner2015] Kirchner F., Kosmatov N., Prevosto V., Signoles J., & Yakobowski B. (2015), "Frama-C: A software analysis perspective", Formal Aspects of Computing, 27(3), pp. 573-609
[Boldo2007] Boldo S., & Filliâtre J. C. (2007, June), "Formal verification of floating-point programs", In 18th IEEE Symposium on Computer Arithmetic (ARITH'07) (pp. 187-194), IEEE
[Ayad2010] Ayad A., & Marché C. (2010, July), "Multi-prover verification of floating-point programs", In International Joint Conference on Automated Reasoning (pp. 127-141), Springer, Berlin, Heidelberg
[Daumas2005] Daumas M., Melquiond G., & Munoz C. (2005, June), "Guaranteed proofs using interval arithmetic", In 17th IEEE Symposium on Computer Arithmetic (ARITH'05) (pp. 188-195), IEEE
[Daumas2010] Daumas M., & Melquiond G. (2010), "Certification of bounds on expressions involving rounded operators", ACM Transactions on Mathematical Software (TOMS), 37(1), pp. 1-20

## Claims

1. A computer implemented method (10) for converting an input computer program into an output computer program achieving a target global accuracy, said input computer program including mathematical functions applied to floating-point variables and the target global accuracy corresponding to a bound on a global error due to mathematical functions approximations and/or to floating-point rounding errors, said method comprising:
- (S10) receiving a target internal accuracy for each mathematical function included in the input computer program, wherein the target internal accuracies correspond to respective bounds on internal errors of the mathematical functions, required to achieve the target global accuracy,
- (S11) analyzing the input computer program to determine a dependency graph describing dependencies between mathematical functions calls,
wherein the method further comprises processing the mathematical functions according to the dependency graph, wherein said processing comprises, for each processed mathematical function:
- (S12) using a value range determination tool to produce a value range for each variable of the processed mathematical function, based on each synthesized mathematical function obtained for a mathematical function on which the processed mathematical function depends according to the dependency graph,
- (S13) using a synthesis tool to produce a synthesized mathematical function having the target internal accuracy for the processed mathematical function, based on the value range for each variable of the processed mathematical function,
wherein the method further comprises (S14) generating the output computer program by replacing, in the input computer program, each mathematical function call by a call to its corresponding synthesized mathematical function.

2. Method (10) according to claim 1, further comprising annotating the output computer program based on the target global accuracy and (S15) verifying the annotations of the output computer program by using a formal verification tool.

3. Method (10) according to claim 2, wherein the output computer program is further annotated based on the value ranges of the mathematical functions and based on the target internal accuracies of the synthesized mathematical functions.

4. Method (10) according to any one of claims 2 to 3, wherein the formal verification tool is a deductive verification tool.

5. Method (10) according to claim 4, wherein the deductive verification tool uses automatic theorem provers.

6. Method (10) according to claim 5, wherein the deductive verification tool uses different automatic theorem provers for proof obligations related to mathematical functions approximations and for proof obligations related to floating-point rounding errors.

7. Method (10) according to any one of claims 2 to 6, wherein, when the output computer program generated does not achieve the target global accuracy, the method further comprises iterating the following steps until an output computer program is generated which achieves the target global accuracy:
- updating the target internal accuracies, by further constraining all or part of said target internal accuracies,
- repeating the processing of the mathematical functions of the input computer program to produce updated synthesized mathematical functions based on the updated target internal accuracies,
- generating the output computer program based on the updated synthesized mathematical functions.

8. Method (10) according to any one of claims 1 to 7, wherein different synthesized mathematical functions are synthesized for a same mathematical function having different call locations in the input computer program.

9. Method (10) according to any one of claims 1 to 8, wherein the value range determination tool is an abstract interpretation tool.

10. Computer program product comprising instructions which, when executed by at least one processor, configure said at least one processor to carry out a method (10) according to any one of claims 1 to 9.

11. Computer-readable storage medium comprising instructions which, when executed by at least one processor, configure said at least one processor to carry out a method (10) according to any one of claims 1 to 9.

12. System for converting an input computer program into an output computer program having a target global accuracy, said input computer program including mathematical functions applied to floating-point variables and the target global accuracy corresponds to a bound on a global error due to mathematical functions approximations and/or to floating-point rounding errors, said system comprising at least one processor and at least one memory, wherein the at least one processor is configured to carry out a method (10) according to any one of claims 1 to 9.

## Patentansprüche

1. Computerimplementiertes Verfahren (10) zum Umwandeln eines Eingabecomputerprogramms in ein Ausgabecomputerprogramm, welches eine globale Zielgenauigkeit erreicht, wobei das Eingabecomputerprogramm mathematische Funktionen umfasst, welche auf Gleitkommavariablen angewendet werden, und die globale Zielgenauigkeit einer Begrenzung an einem globalen Fehler aufgrund von mathematischen Funktionsannäherungen und/oder von Gleitkommarundungsfehlern entspricht, wobei das Verfahren umfasst:
- (S10) Empfangen einer internen Zielgenauigkeit für jede mathematische Funktion, welche in dem Eingabecomputerprogramm umfasst ist, wobei die internen Zielgenauigkeiten jeweiligen Begrenzungen an internen Fehlern der mathematischen Funktionen entsprechen, welche erforderlich sind, um die globale Zielgenauigkeit zu erreichen,
- (S11) Analysieren des Eingabecomputerprogramms, um einen Abhängigkeitsgraphen zu bestimmen, welcher Abhängigkeiten zwischen Aufrufen von mathematischen Funktionen beschreibt,
wobei das Verfahren ferner ein Verarbeiten der mathematischen Funktionen gemäß dem Abhängigkeitsgraphen umfasst, wobei das Verarbeiten für jede verarbeitete mathematische Funktion umfasst:
- (S12) Verwenden eines Wertebereichsbestimmungswerkzeugs, um einen Wertebereich für jede Variable der verarbeiteten mathematischen Funktion zu erzeugen, auf Grundlage jeder synthetisierten mathematischen Funktion, welche für eine mathematische Funktion erhalten worden ist, von welcher die verarbeitete mathematische Funktion gemäß dem Abhängigkeitsgraphen abhängig ist,
- (S13) Verwenden eines Synthesewerkzeugs, um eine synthetisierte mathematische Funktion zu erzeugen, welche die interne Zielgenauigkeit für die verarbeitete mathematische Funktion aufweist, auf Grundlage des Wertebereichs für jede Variable der verarbeiteten mathematischen Funktion,
wobei das Verfahren ferner (S14) ein Generieren des Ausgabecomputerprogramms durch ein Ersetzen, in dem Eingabecomputerprogramm, jedes Aufrufs einer mathematischen Funktion durch einen Aufruf seiner entsprechenden synthetisierten mathematischen Funktion umfasst.

2. Verfahren (10) nach Anspruch 1, ferner umfassend ein Annotieren des Ausgabecomputerprogramms auf Grundlage der globalen Zielgenauigkeit und (S15) ein Verifizieren der Annotationen des Ausgabecomputerprogramms unter Verwendung eines formalen Verifizierungswerkzeugs.

3. Verfahren (10) nach Anspruch 2, wobei das Ausgabecomputerprogramm ferner auf Grundlage der Wertebereiche der mathematischen Funktionen und auf Grundlage der internen Zielgenauigkeiten der synthetisierten mathematischen Funktionen annotiert wird.

4. Verfahren (10) nach einem der Ansprüche 2 bis 3, wobei das formale Verifizierungswerkzeug ein deduktives Verifizierungswerkzeug ist.

5. Verfahren (10) nach Anspruch 4, wobei das deduktive Verifizierungswerkzeug automatische Theorembeweiser verwendet.

6. Verfahren (10) nach Anspruch 5, wobei das deduktive Verifizierungswerkzeug für Beweisverpflichtungen in Bezug auf mathematische Funktionsannäherungen und für Beweisverpflichtungen in Bezug auf Gleitkommarundungsfehler verschiedene automatische Theorembeweiser verwendet.

7. Verfahren (10) nach einem der Ansprüche 2 bis 6, wobei, wenn das generierte Ausgabecomputerprogramm die globale Zielgenauigkeit nicht erreicht, das Verfahren ferner ein Iterieren der folgenden Schritte umfasst, bis ein Ausgabecomputerprogramm generiert wird, welches die globale Zielgenauigkeit aufweist:
- Aktualisieren der internen Zielgenauigkeiten durch ein weiteres Beschränken aller oder eines Teils der internen Zielgenauigkeiten,
- Wiederholen der Verarbeitung der mathematischen Funktionen des Eingabecomputerprogramms, um aktualisierte synthetisierte mathematische Funktionen zu erzeugen, auf Grundlage der aktualisierten internen Zielgenauigkeiten,
- Generieren des Ausgabecomputerprogramms auf Grundlage der aktualisierten synthetisierten mathematischen Funktionen.

8. Verfahren (10) nach einem der Ansprüche 1 bis 7, wobei verschiedene synthetisierte mathematische Funktionen für eine gleiche mathematische Funktion synthetisiert werden, welche verschiedene Aufruforte in dem Eingabecomputerprogramm aufweist.

9. Verfahren (10) nach einem der Ansprüche 1 bis 8, wobei das Wertebereichsbestimmungswerkzeug ein abstraktes Interpretationswerkzeug ist.

10. Computerprogrammprodukt, umfassend Anweisungen, welche, wenn sie durch wenigstens einen Prozessor ausgeführt werden, den wenigstens einen Prozessor derart konfigurieren, dass er ein Verfahren (10) nach einem der Ansprüche 1 bis 9 durchführt.

11. Computerlesbares Speichermedium, umfassend Anweisungen, welche, wenn sie durch wenigstens einen Prozessor ausgeführt werden, den wenigstens einen Prozessor derart konfigurieren, dass er ein Verfahren (10) nach einem der Ansprüche 1 bis 9 durchführt.

12. System zum Umwandeln eines Eingabecomputerprogramms in ein Ausgabecomputerprogramm, welches eine globale Zielgenauigkeit erreicht, wobei das Eingabecomputerprogramm mathematische Funktionen umfasst, welche auf Gleitkommavariablen angewendet werden, und die globale Zielgenauigkeit einer Begrenzung an einem globalen Fehler aufgrund von mathematischen Funktionsannäherungen und/oder von Gleitkommarundungsfehlern entspricht, wobei das System wenigstens einen Prozessor und wenigstens einen Speicher umfasst, wobei der wenigstens eine Prozessor dazu eingerichtet ist, ein Verfahren (10) nach einem der Ansprüche 1 bis 9 durchzuführen.

## Revendications

1. Procédé mis en oeuvre par ordinateur (10) pour convertir un programme informatique d'entrée en un programme informatique de sortie en atteignant une précision globale cible, ledit programme informatique d'entrée comportant des fonctions mathématiques appliquées à des variables à virgule flottante et la précision globale cible correspondant à une limite sur une erreur globale due à des approximations de fonctions mathématiques et/ou à des erreurs d'arrondi à virgule flottante, ledit procédé comprenant :
- (S10) la réception d'une précision interne cible pour chaque fonction mathématique comprise dans le programme informatique d'entrée, dans lequel les précisions internes cibles correspondent à des limites respectives sur des erreurs internes des fonctions mathématiques, requises pour atteindre la précision globale cible,
- (S11) l'analyse du programme informatique d'entrée pour déterminer un graphe de dépendances décrivant des dépendances entre des appels de fonctions mathématiques,
dans lequel le procédé comprend en outre le traitement des fonctions mathématiques selon le graphe de dépendances, dans lequel ledit traitement comprend, pour chaque fonction mathématique traitée :
- (S12) l'utilisation d'un outil de détermination de plage de valeurs pour produire une plage de valeurs pour chaque variable de la fonction mathématique traitée, sur la base de chaque fonction mathématique synthétisée obtenue pour une fonction mathématique dont dépend la fonction mathématique traitée selon le graphe de dépendances,
- (S13) l'utilisation d'un outil de synthèse pour produire une fonction mathématique synthétisée ayant la précision interne cible pour la fonction mathématique traitée, sur la base de la plage de valeurs pour chaque variable de la fonction mathématique traitée,
dans lequel le procédé comprend en outre (S14) la génération du programme informatique de sortie en remplaçant, dans le programme informatique d'entrée, chaque appel de fonction mathématique par un appel à sa fonction mathématique synthétisée correspondante.

2. Procédé (10) selon la revendication 1, comprenant en outre l'annotation du programme informatique de sortie sur la base de la précision globale cible et (S15) la vérification des annotations du programme informatique de sortie à l'aide d'un outil de vérification formelle.

3. Procédé (10) selon la revendication 2, dans lequel le programme informatique de sortie est en outre annoté sur la base des plages de valeurs des fonctions mathématiques et sur la base des précisions internes cibles des fonctions mathématiques synthétisées.

4. Procédé (10) selon l'une quelconque des revendications 2 à 3, dans lequel l'outil de vérification formelle est un outil de vérification déductive.

5. Procédé (10) selon la revendication 4, dans lequel l'outil de vérification déductive utilise des prouveurs automatiques de théorèmes.

6. Procédé (10) selon la revendication 5, dans lequel l'outil de vérification déductive utilise différents prouveurs automatiques de théorèmes pour des obligations de preuve liées à des approximations de fonctions mathématiques et pour des obligations de preuve liées à des erreurs d'arrondi à virgule flottante.

7. Procédé (10) selon l'une quelconque des revendications 2 à 6, dans lequel, lorsque le programme informatique de sortie généré n'atteint pas la précision globale cible, le procédé comprend en outre l'itération des étapes suivantes jusqu'à ce qu'un programme informatique de sortie soit généré qui atteint la précision globale cible :
- la mise à jour des précisions internes cibles, en contraignant davantage la totalité ou une partie desdites précisions internes cibles,
- la répétition du traitement des fonctions mathématiques du programme informatique d'entrée pour produire des fonctions mathématiques synthétisées mises à jour sur la base des précisions internes cibles mises à jour,
- la génération du programme informatique de sortie sur la base des fonctions mathématiques synthétisées mises à jour.

8. Procédé (10) selon l'une quelconque des revendications 1 à 7, dans lequel différentes fonctions mathématiques synthétisées sont synthétisées pour une même fonction mathématique ayant différents emplacements d'appel dans le programme informatique d'entrée.

9. Procédé (10) selon l'une quelconque des revendications 1 à 8, dans lequel l'outil de détermination de plage de valeurs est un outil d'interprétation abstraite.

10. Produit-programme informatique comprenant des instructions qui, lorsqu'elles sont exécutées par au moins un processeur, configurent ledit au moins un processeur pour effectuer un procédé (10) selon l'une quelconque des revendications 1 à 9.

11. Support de stockage lisible par ordinateur comprenant des instructions qui, lorsqu'elles sont exécutées par au moins un processeur, configurent ledit au moins un processeur pour effectuer un procédé (10) selon l'une quelconque des revendications 1 à 9.

12. Système de conversion d'un programme informatique d'entrée en un programme informatique de sortie ayant une précision globale cible, ledit programme informatique d'entrée comportant des fonctions mathématiques appliquées à des variables à virgule flottante et la précision globale cible correspond à une limite sur une erreur globale due à des approximations de fonctions mathématiques et/ou à des erreurs d'arrondi à virgule flottante, ledit système comprenant au moins un processeur et au moins une mémoire, dans lequel le au moins un processeur est configuré pour effectuer un procédé (10) selon l'une quelconque des revendications 1 à 9.
